# EUROPÄISCHE PATENTSCHRIFT

(11) **EP 3 841 000 B1**
(45) Veröffentlichungstag und Bekanntmachung des Hinweises auf die Patenterteilung: **02.11.2022**
(21) Anmeldenummer: 19759548.1
(22) Anmeldetag: 23.08.2019
(51) Int. Cl.: B62D 53/06, B60K 1/04, B62D 59/04

(54) **WOHNWAGEN MIT EINSTELLBARER STÜTZLAST**
CARAVAN HAVING AN ADJUSTABLE TONGUE LOAD
CARAVANE À CHARGE D'APPUI RÉGLABLE

(30) Priorität: 23.08.2018 DE 102018120688
(43) Veröffentlichungstag der Anmeldung: 30.06.2021
(73) Patentinhaber: Erwin Hymer Group SE, 88339 Bad Waldsee (DE)
(72) Erfinder: KASTEN, Ole, 21680 Stade (DE); WELTJEN, Martin, 21726 Oldendorf (DE); KAISER, Ria, 21077 Hamburg (DE); WULF, Mathis, 21680 Stade (DE)
(74) Vertreter: Waller, Stefan
(86) Internationale Anmeldenummer: PCT/EP2019/072656
(87) Internationale Veröffentlichungsnummer: WO 2020/039101

(56) Entgegenhaltungen:
- DE-A1- 2 118 847
- DE-U1-202016 006 076
- FR-A1- 2 779 106
- FR-A1- 2 972 419
- US-A- 3 578 190

## Beschreibung

Die Erfindung betrifft einen Wohnwagen nach dem Oberbegriff des Patentanspruchs 1.

Ein Caravan oder Wohnwagen ist ein Anhänger für ein Kraftfahrzeug, in dem eine geeignete Einrichtung für das Bewohnen und den Aufenthalt von Personen verbaut ist.

Ein solcher Wohnwagen wird üblicherweise mit einer Zugdeichsel und Kupplungsvorrichtung ausgestattet, die für eine Kugelkopf-Anhängerkupplung vorgesehen ist. Im Regelfall handelt es sich bei einem Wohnwagen um einen einachsigen Anhänger bzw. einen Anhänger mit einer Tandemachse. Für die Stabilität der Kombination aus Zugfahrzeug und Wohnwagen ist daher entscheidend, dass eine definierte und vom Hersteller des Zugfahrzeugs vorgegebene Stützlast auf der Anhängerkupplung zwischen einem Minimalwert und einem Maximalwert eingehalten wird.

Gerade bei einem Wohnwagen tritt dabei das zusätzliche Problem auf, dass in diesen bei der Benutzung Gepäck und Gegenstände geladen werden. So werden in Schränke Lebensmittel, Kleidung etc. verstaut. Weiter werden oftmals Sport- und Freizeitgegenstände wie Fahrräder und Ähnliches in den Wohnwagen bei der Urlaubsreise geladen. Der Hersteller stellt für den nicht beladenen Wohnwagen eine ausgeglichene und sinnvolle Gewichtsverteilung konstruktiv sicher, sodass eine gewünschte und zulässige Stützlast sich ergibt. Wenn jedoch ein Benutzer den Wohnwagen ungleichmäßig belädt, können sich unzulässige Stützlastwerte ergeben. Zumindest ist es sehr aufwendig und unbequem, Gegenstände in dem bereits beladenen Wohnwagen solange an anderen Stellen zu platzieren, bis eine zulässige Stützlast erreicht wird.

Die Stützlast muss aber gerade im beladenen Zustand, der den Regelfall beim Ziehen eines Wohnwagens darstellt, eingehalten werden. Gleichzeitig darf die Stützlast aus Gründen der Fahrsicherheit und der Rangierfähigkeit im abgekoppelten Zustand in keinem Fall negativ werden, da dies bedeuten würde, dass die Deichsel nach oben schlägt, sobald sie abgekuppelt wird.

Bisherige Lösungsvorschläge sehen für eine bequeme und leichte Einstellbarkeit der Stützlast Ballast vor, der entsprechend positioniert werden kann. Eine Möglichkeit hierfür ist die Verwendung von Wassertanks zwischen denen Wasser umgepumpt wird. Nachteilig an diesem Stand der Technik ist, dass Ballast vorwiegend zusätzliches Gewicht bedeutet und zumindest ein Wasserversorgungssystem sehr viel aufwendiger wird, auch wenn es sich gleichzeitig um ein Brauch- oder Trinkwassersystem handelt.

Bei Tandemachsen ist es auch bekannt, die Federungssysteme der beiden Achsen im Sinne einer Niveauregulierung unterschiedlich zu belasten, beispielsweise bei einer Luftfederung aus einer Achse Luft abzulassen, um eine unterschiedliche Verteilung der Belastung der Achsen zu erreichen. Dadurch ergibt sich auch eine veränderte Stützlast. Beispiele hierfür sind bekannt aus der DE10 2004 003 023 B4 und der EP 2 591 928 A2. Dies ist jedoch bei Einachsanhängern schon vom Grundsatz her nicht möglich.

Aus der DE 20 2005 017 281 U1 ist eine Einstellung der Stützlast durch Verschieben der Achse gegenüber dem Anhänger bekannt. Dies ist jedoch sehr aufwendig und teuer.

Es sind im Stand der Technik Elektrofahrzeuge oder Hybridfahrzeuge bekannt, wobei bei letzteren der Antrieb aus einer Kombination aus einem Verbrennungsmotor mit einem elektrischen Antrieb besteht. Dabei kann der elektrische Antrieb so eingesetzt werden, dass er zusätzlich zu dem Verbrennungsmotor wirkt und zugeschaltet ist, wenn in Beschleunigungsphasen oder bei Bergauffahrt in einer Steigung eine erhöhte Leistung erforderlich ist. Beispielsweise bezieht dabei der Elektroantrieb seine Energie aus einem elektrischen Energiespeicher, insbesondere einer Batterie, die während eines gleichmäßigen Fahrbetriebes oder beim regenerativen Bremsen aufgeladen wird.

Für solche Fahrzeuge sind Anhänger bekannt, in denen Energiespeicher, insbesondere große Batterien bzw. Akkumulatoren angeordnet werden, um für das ziehende Fahrzeug zusätzliche Energie zur Verfügung zu stellen. Dadurch kann die Reichweite eines reinen Elektrofahrzeugs erheblich vergrößert werden. Solche Anhänger werden auch als "Range-Extender" bezeichnet. Dabei sind auch Systeme bekannt, bei denen der Anhänger einen eigenen Antrieb auf seine Räder aufweist und das Zugfahrzeug schiebt.

Die Batterien solcher Anhänger weisen einen erheblich höheren Energieinhalt auf und stellen daher naturgemäß eine relativ schwere Komponente dar.

Der vorliegenden Erfindung liegt die Aufgabe zugrunde, einen Wohnwagen zur Verfügung zu stellen, bei dem die Stützlast auf einfache Art und Weise einstellbar ist, insbesondere an eine Beladung angepasst werden kann.

Diese Aufgabe wird durch einen Wohnwagen mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass bei einem Wohnwagen mit einer Batterie und einer Achse die Batterie zur Stromversorgung eines Fahrantriebs eines Zugfahrzeugs und/oder eines optionalen Fahrantriebes des Wohnwagens bei Anhängerfahrt im Straßenverkehr ausgelegt und in Längsrichtung des Wohnwagens verschiebbar gelagert ist sowie durch eine Einstellvorrichtung verschoben werden kann.

Wenn der Wohnwagen als Anhänger im Straßenverkehr von einem Elektrofahrzeug oder Hybridfahrzeug gezogen wird, kann deren Reichweite bzw. Leistungsfähigkeit in Spitzenzeiten erhöht werden, wenn beispielsweise über eine Kabelverbindung dem Zugfahrzeug elektrische Energie aus der Batterie zur Verfügung gestellt wird. Als weitere Variante ist es auch denkbar, dass der Wohnwagen selbst angetriebene Räder aufweist, die aus der Batterie versorgt werden und insofern sein Schleppwiderstand bei langen Fahrstrecken vermindert wird. Auch wenn moderne Batterien zum Einsatz kommen, die eine hohe Energiedichte pro Gewicht aufweisen, haben solche Batterien ein erhebliches Gewicht. Erfindungsgemäß kann bereits durch nur über eine kurze Strecke gegebene Verschiebbarkeit der Gesamtschwerpunkt bei Beladung des Wohnwagens so verändert werden, dass die Stützlast in einem günstigen, erlaubten Bereich liegt. Dies ermöglicht für Wohnwagen vorteilhaft eine größere Freiheit bei Grundriss- und Beladungskonzepten. Es muss nicht unbedingt dafür Sorge getragen werden, dass bevorzugte Plätze zum Verstauen von schwerem Gepäck in möglichst in Bezug auf den Schwerpunkt neutralen Zonen über der Achse liegen.

Ein weiterer Vorteil ergibt sich daraus, dass Stützlastgrenzen eingehalten werden können, wenn kleinere Fahrzeuge große einachsige Wohnwagen ziehen sollen und nur eine geringe oder sehr geringe Stützlast zur Verfügung stellen. Dies gilt insbesondere für den Fall von Elektrofahrzeugen und Hybridfahrzeugen.

Die Batterie kann mit einer Zahnstange verbunden oder auf dieser gelagert sein, auf die die Einstellvorrichtung über ein Zahnrad wirkt.

Die Einstellvorrichtung kann ein Seilzugsystem aufweisen.

In einer günstigen Ausführungsform weist die Einstellvorrichtung eine Gewindestange und Mutter auf, wobei die Batterie mit einem von beiden verbunden ist und eine Verschiebung der Batterie entweder durch Verdrehen der Gewindestange oder der Mutter durch die Einstellvorrichtung bewirkt wird.

Eine Ausführungsform ist dabei, dass an der Batterie die Gewindestange angeordnet ist und durch die Einstellvorrichtung eine Mutter bewegt wird, um die Batterie an der Gewindestange zu ziehen oder zu schieben. Ebenso ist jedoch auch eine umgekehrte Ausführung möglich, bei der die Gewindestange mit der Einstellvorrichtung verbunden ist. Ein solches System bzw. Spindelsystem ist selbsthemmend. Vorteilhaft sind daher keine weiteren Maßnahmen zur Verriegelung der Batterie in der angefahrenen Position erforderlich und diese wird sicher gehalten.

Die Einstellvorrichtung kann durch eine Handkurbel bedient werden.

Vorteilhaft wird die Einstellvorrichtung elektrisch angetrieben und verschiebt abhängig von einem Stellsignal die Batterie.

Die Stützlast kann durch einen Sensor an der Anhängerkupplung erfasst werden, insbesondere durch einen Piezokeramik-Sensor.

In einer Weiterbildung bestimmt eine elektrische Steuerung die Stützlast und steuert über ein Stellsignal die Einstellvorrichtung an.

Eine solche Steuerung kann die bestehende Stützlast direkt berechnen. Es ist möglich, dass diese die Stützlast auch anzeigt, wenn eine geeignetes Display oder Anzeigefeld vorgesehen wird. Über ein geeignetes Bedienfeld, eine über Kabel verbundene Bedienvorrichtung, aber auch eventuell drahtlos mithilfe einer App und einem Smartphone oder einer sonstigen Fernbedienung kann die Einstellung der Stützlast gesteuert werden oder eine vollautomatische Einstellung veranlasst werden. Eine solche automatisierte Einstellung ist bedienerfreundlich und fehlerunanfällig, da die Stützlast direkt mit der zulässigen Stützlast des Fahrzeugs abgeglichen werden kann, beispielsweise, wenn ein entsprechendes Programm oder die App hierfür Tabellen oder eine Eingabemöglichkeit für das Zugfahrzeug vorsieht.

Der Fahrzeugrahmen kann aus in Fahrzeuglängsrichtung verlaufenden äußeren Längsträgern und einem Innenrahmen aus in Fahrzeuglängsrichtung verlaufenden, zumindest abschnittsweise parallelen Innenträgern bestehen, wobei die Batterie zwischen den Innenträgern im Innenrahmen angeordnet ist.

Die Batterie kann aufgeteilt sein in eine vordere Batterie und eine hintere Batterie, wobei zwischen diesen die Achse des Wohnwagens angeordnet ist.

Durch diesen im Inneren des Fahrzeugrahmens montierten Innenrahmen ergibt sich eine erhöhte Rahmensteifigkeit. In den zumindest abschnittsweise parallel ausgeführten Innenträgern kann die Batterie verschiebbar geführt sein. Die Aufteilung der Batterie ergibt eine vorteilhafte grundsätzliche Gewichtsverteilung, wobei es im Regelfall ausreichend ist, wenn nur eine der Teilbatterien verschiebbar ist.

Es ist möglich, die zuvor beschriebenen Merkmale eines Wohnwagens auch ganz allgemein jeweils bei einem Anhänger einzusetzen. Insbesondere können die in den Ansprüchen angegebenen Merkmale für einen Wohnanhänger bei jedem einzelnen der Ansprüche und unabhängig von den Merkmalen anderer Unteransprüche auch für einen Anhänger allgemein vorgesehen werden.

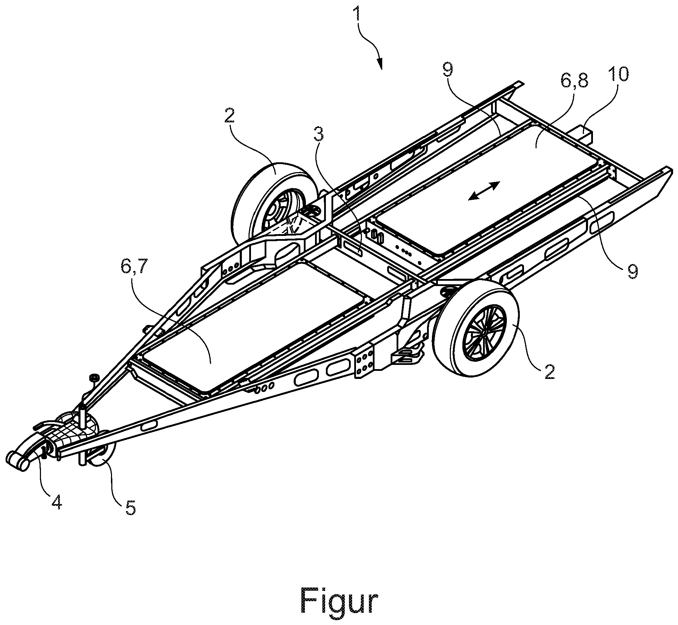

Weitere Vorteile und Einzelheiten der Erfindung werden anhand des in der schematischen Figur dargestellten Ausführungsbeispiels näher erläutert. Hierbei zeigt die Figur schematisch einen Fahrzeugrahmen 1 eines erfindungsgemäßen, nicht näher dargestellten Wohnwagens mit den Rädern 2 an einer Achse 3 sowie einem Kupplungskopf 4 sowie einem Stützrad 5. Eine Batterie 6 ist unterhalb des hier nicht dargestellten Bodens des Wohnwagens unterflur angeordnet und aufgeteilt in eine vordere Batterie 7, die vor der Achse 3 liegt, und eine hinteren Batterie 8.

Die hintere Batterie 8 ist wie durch den Doppelpfeil dargestellt in Innenträgern 9 des Fahrzeugrahmens 1, die parallel sind, verschiebbar gelagert. Eine Einstellvorrichtung 10 kann über eine nicht dargestellte Mutter-Gewindestangen Kombination die hintere Batterie 8 verschieben. Dabei wird die hintere Batterie 8 in ihrer Position durch die Selbsthemmung gehalten. Eine Steuerung erfasst ein Signal eines Drucksensors in dem Kupplungskopf 4, bestimmt aus diesem eine Stützlast und gibt ein Stellsignal an die Einstellvorrichtung 10, die automatisiert die hintere Batterie 8 soweit verschiebt, bis eine zulässige Stützlast sich ergibt.

## Patentansprüche

1. Wohnwagen mit einer Batterie (6,7,8) und einer Achse (3),
**dadurch gekennzeichnet,**
**dass** die Batterie (6,8) zur Stromversorgung eines Fahrantriebs eines Zugfahrzeugs und/oder eines optionalen Fahrantriebes des Wohnwagens bei Anhängerfahrt im Straßenverkehr ausgelegt und in Längsrichtung des Wohnwagens verschiebbar gelagert ist sowie durch eine Einstellvorrichtung (10) verschoben werden kann.

2. Wohnwagen nach Anspruch 1,
**dadurch gekennzeichnet,**
**dass** die Batterie (6) mit einer Zahnstange verbunden oder auf dieser gelagert ist, auf die die Einstellvorrichtung (10) über ein Zahnrad wirkt.

3. Wohnwagen nach Anspruch 1 oder 2,
**dadurch gekennzeichnet,**
**dass** die Einstellvorrichtung (10) ein Seilzugsystem aufweist.

4. Wohnwagen nach einem der Ansprüche 1 bis 3,
**dadurch gekennzeichnet,**
**dass** die Einstellvorrichtung (10) eine Gewindestange und Mutter aufweist, wobei die Batterie (6,8) mit einem von beiden verbunden ist und eine Verschiebung der Batterie (6,8) entweder durch Verdrehen der Gewindestange oder der Mutter durch die Einstellvorrichtung (10) bewirkt wird.

5. Wohnwagen nach Anspruch 4,
**dadurch gekennzeichnet,**
**dass** die Einstellvorrichtung (10) durch eine Handkurbel bedient werden kann.

6. Wohnwagen nach einem der vorhergehenden Ansprüche,
**dadurch gekennzeichnet,**
**dass** die Einstellvorrichtung (10) elektrisch angetrieben wird und abhängig von einem Stellsignal die Batterie (6,8) verschiebt.

7. Wohnwagen nach einem der vorhergehenden Ansprüche,
**dadurch gekennzeichnet,**
**dass** die Stützlast durch einen Sensor an der Anhängerkupplung erfasst wird, insbesondere durch einen Piezokeramik-Sensor.

8. Wohnwagen nach Anspruch 7 und Anspruch 6,
**dadurch gekennzeichnet,**
**dass** eine elektrische Steuerung die Stützlast bestimmt und über ein Stellsignal die Einstellvorrichtung (10) ansteuert.

9. Wohnwagen nach einem der vorhergehenden Ansprüche,
**dadurch gekennzeichnet,**
**dass** der Fahrzeugrahmen (1) aus in Fahrzeuglängsrichtung verlaufenden äußeren Längsträgern und einem Innenrahmen aus in Fahrzeuglängsrichtung verlaufenden, zumindest abschnittsweise parallelen Innenträgern (9) besteht, wobei die Batterie (6,7,8) zwischen den Innenträgern (9) im Innenrahmen angeordnet ist.

10. Wohnwagen nach einem der vorhergehenden Ansprüche,
**dadurch gekennzeichnet,**
**dass** die Batterie (6,7,8) aufgeteilt ist in eine vordere Batterie (7) eine hintere Batterie (8), wobei zwischen diesen die Achse (3) des Wohnwagens angeordnet ist.

## Claims

1. Mobile home having a battery (6, 7, 8) and an axle (3),
**characterized in that**
the battery (6, 8) is configured to supply electric current to a travel drive of a towing vehicle and/or an optional travel drive of the mobile home during travel with a trailer in road traffic and is displaceably supported in the longitudinal direction of the mobile home and can be displaced by an adjustment apparatus (10) .

2. Mobile home according to Claim 1,
**characterized in that**
the battery (6) is connected to a toothed rack, or is supported thereon, on which the adjustment apparatus (10) acts via a toothed wheel.

3. Mobile home according to Claim 1 or 2, **characterized in that**
the adjustment apparatus (10) has a cable pull system.

4. Mobile home according to one of Claims 1 to 3, **characterized in that**
the adjustment apparatus (10) has a threaded rod and nut, wherein the battery (6, 8) is connected to one of the two and a displacement of the battery (6, 8) is brought about by rotating either the threaded rod or the nut by the adjustment apparatus (10).

5. Mobile home according to Claim 4,
**characterized in that**
the adjustment apparatus (10) can be operated by a hand crank.

6. Mobile home according to one of the preceding claims,
**characterized in that**
the adjustment apparatus (10) is electrically driven and displaces the battery (6, 8) in accordance with an adjustment signal.

7. Mobile home according to one of the preceding claims,
**characterized in that**
the tongue load is detected by a sensor on the trailer coupling, in particular by a piezoceramic sensor.

8. Mobile home according to Claim 7 and Claim 6, **characterized in that**
an electrical control system determines the tongue load and controls the adjustment apparatus (10) by means of an adjustment signal.

9. Mobile home according to one of the preceding claims,
**characterized in that**
the vehicle frame (1) comprises external longitudinal carriers which extend in the longitudinal vehicle direction and an internal frame comprising at least partially parallel internal carriers (9) which extend in the longitudinal vehicle direction, wherein the battery (6, 7, 8) is arranged between the internal carriers (9) in the internal frame.

10. Mobile home according to one of the preceding claims,
**characterized in that**
the battery (6, 7, 8) is divided into a front battery (7) and a rear battery (8), wherein the axle (3) of the mobile home is arranged therebetween.

## Revendications

1. Caravane, comprenant une batterie (6, 7, 8) et un essieu (3),
**caractérisée en ce que** la batterie (6, 8) est conçue pour l'alimentation électrique d'un système de traction d'un véhicule tracteur et/ou d'un système de traction en option de la caravane lorsque la remorque se déplace dans la circulation routière, et est montée de manière à pouvoir être déplacée dans la direction longitudinale de la caravane, et peut être déplacée par un dispositif de réglage (10).

2. Caravane selon la revendication 1, **caractérisée en ce que** la batterie (6) est reliée à une crémaillère, ou est montée sur celle-ci, sur laquelle le dispositif de réglage (10) agit par l'intermédiaire d'une roue dentée.

3. Caravane selon la revendication 1 ou 2, **caractérisée en ce que** le dispositif de réglage (10) présente un système de poulie.

4. Caravane selon l'une quelconque des revendications 1 à 3, **caractérisée en ce que** le dispositif de réglage (10) présente une tige filetée et un écrou, la batterie (6, 8) étant reliée à l'une ou à l'autre, et un déplacement de la batterie (6, 8) est provoqué par la rotation soit de la tige filetée, soit de l'écrou à l'aide du dispositif de réglage (10).

5. Caravane selon la revendication 4, **caractérisée en ce que** le dispositif de réglage (10) peut être commandé par une manivelle.

6. Caravane selon l'une quelconque des revendications précédentes, **caractérisée en ce que** le dispositif de réglage (10) est entraîné électriquement et déplace la batterie (6, 8) en fonction d'un signal de réglage.

7. Caravane selon l'une quelconque des revendications précédentes, **caractérisée en ce que** la charge d'appui est détectée par un capteur au niveau de l'attelage de remorque, en particulier par un capteur piézocéramique.

8. Caravane selon la revendication 7 et la revendication 6, **caractérisée en ce qu'**une commande électrique détermine la charge d'appui et pilote le dispositif de réglage (10) par l'intermédiaire d'un signal de réglage.

9. Caravane selon l'une quelconque des revendications précédentes, **caractérisée en ce que** le châssis de véhicule (1) est composé de longerons extérieurs s'étendant dans la direction longitudinale du véhicule et d'un châssis intérieur composé de supports intérieurs (9) parallèles au moins par endroits, s'étendant dans la direction longitudinale du véhicule, la batterie (6, 7, 8) étant disposée entre les supports intérieurs (9) dans le châssis intérieur.

10. Caravane selon l'une quelconque des revendications précédentes, **caractérisée en ce que** la batterie (6, 7, 8) est divisée en une batterie avant (7) et une batterie arrière (8), l'essieu (3) de la caravane étant disposé entre les deux.
